# EUROPÄISCHE PATENTSCHRIFT

(11) **EP 3 578 716 B1**
(45) Veröffentlichungstag und Bekanntmachung des Hinweises auf die Patenterteilung: **16.09.2020**
(21) Anmeldenummer: 18176294.9
(22) Anmeldetag: 06.06.2018
(51) Int. Cl.: E01C 19/48, B60R 11/00

(54) **FERNBEDIENUNGSHALTER FÜR EINEN STRASSENFERTIGER**
REMOTE CONTROL HOLDER FOR A PAVER
SUPPORT À TÉLÉCOMMANDE POUR UNE FINISSEUSE DE ROUTE

(43) Veröffentlichungstag der Anmeldung: 11.12.2019
(73) Patentinhaber: Joseph Vögele AG, 67067 Ludwigshafen (DE)
(72) Erfinder: ERDTMANN, Bernhard, 68309 Mannheim (DE); SEITHER, Thomas, 67165 Waldsee (DE); PONTIUS, Johannes, 66839 Schmelz (DE)
(74) Vertreter: Grünecker Patent- und Rechtsanwälte PartG mbB

(56) Entgegenhaltungen:
- EP-A1- 2 644 454
- EP-A1- 3 075 909
- US-A1- 2014 064 847

## Beschreibung

Die vorliegende Erfindung betrifft einen Fernbedienungshalter für einen Straßenfertiger. Straßenfertiger weisen, wie andere übliche Baumaschinen, einen zentralen Bedienstand auf, welcher meist in erhöhter Position angeordnet ist und diverse für das Fahren und den Einbaubetrieb nötige Bedienelemente umfasst. Da es im Einbaubetrieb zumeist notwendig ist, die Fertigung direkt an der Einbaubohle des Straßenfertigers zu überwachen, um deren Einstellungen unmittelbar an sich ändernde Umgebungsbedingungen anzupassen, sind an der Einbaubohle eine oder mehrere Fernbedienungen angebracht, mit denen ein zusätzlicher Arbeiter die Einbauparameter verändern und gleichzeitig die Einstellparameter unmittelbar überprüfen kann. So ist beispielsweise eine Fernbedienung zur Steuerung der Bohlenfunktionen, des Kratzerbandes, der Verteilerschnecke, etc. und eine zweite Fernbedienung zur Steuerung einer Nivellierautomatik vorhanden. Die Fernbedienungen weisen Bedienelemente zum Vornehmen der Einstellungen auf und können auch Anzeigeelemente zur Darstellung von Einstellungswerten haben. Die bislang bekannten Systeme zur Anbringung und Halterung der Fernbedienungen an der Einbaubohle weisen jedoch diverse Nachteile auf, wie beispielsweise eine ungünstige ergonomische Anordnung oder einen mangelnden Schutz der Fernbedienungen. Die US2014/0064847 A1 offenbart einen Straßenfertiger, der Fernbedienungen aufweist, die in Halterungen im Bereich der Einbaubohle montiert sind.

Aufgabe der vorliegenden Erfindung ist es, einen verbesserten Fernbedienungshalter bereitzustellen.

Die Aufgabe wird gelöst durch einen Fernbedienungshalter mit den Merkmalen des Anspruchs 1. Vorteilhafte Weiterbildungen der Erfindung sind in den Unteransprüchen angegeben.

Ein erfindungsgemäßer Fernbedienungshalter für einen Straßenfertiger, insbesondere für eine Einbaubohle des Straßenfertigers, ist dazu konfiguriert, eine erste und eine zweite Fernbedienung zu halten, wobei die Fernbedienungen Bedienelemente zum Steuern von Funktionen des Straßenfertigers aufweisen. Dabei umfasst der Fernbedienungshalter zwei Flügel mit jeweils einer Aufnahmemulde, und jeder Flügel ist dazu vorgesehen, jeweils eine Fernbedienung in der Aufnahmemulde aufzunehmen. Die Flügel sind zwischen einer ersten Position, in welcher die Flügel im Wesentlichen eben nebeneinander angeordnet sind und der Fernbedienungshalter geöffnet ist, und einer zweiten Position, in welcher die Flügel im Wesentlichen aneinander geschwenkt sind und der Fernbedienungshalter geschlossen ist, schwenkbar. Die wannenförmigen Aufnahmemulden weisen eine Länge und Breite auf, so dass jeweils eine Fernbedienung darin eingelegt werden kann, und ihre Höhe entspricht im Wesentlichen der der Fernbedienung. So ist die Fernbedienung bestmöglich gegen äußere Einflüsse geschützt. Die Anordnung der Flügel nebeneinander nutzt den vorhandenen Platz an der Einbaubohle bestmöglich aus, so dass die Bewegungsfreiheit eines Arbeiters nicht eingeschränkt wird. Die aufgeklappte, geöffnete Position des Fernbedienungshalters wird im Betrieb des Straßenfertigers zur Verwendung der Fernbedienungen eingenommen und die aneinander geschwenkte, geschlossene Position kann nach Betriebsende zur Verwahrung der Fernbedienungen eingenommen werden. In dem geschlossenen Zustand sind die Fernbedienungen an allen Seiten nach außen hin von den Gehäuseteilen des Fernbedienungshalters umgeben und so bestmöglich geschützt. Zusätzlich nimmt der Fernbedienungshalter in der geschlossenen Position nur einen äußerst geringen Platz ein, was beim Zusammenschieben der Einbaubohle und einem Versetzen oder Verladen des Straßenfertigers besonders vorteilhaft ist.

In einer vorteilhaften Variante weist der Fernbedienungshalter ein Mittelteil auf, an welchem der erste und zweite Flügel schwenkbar gelagert sind. Das Mittelteil bietet somit die mechanische Verbindung der beiden Flügel und ermöglicht die geometrische Anordnung der Komponenten derart, dass das Schwenken der Flügel aneinander möglich ist. Dabei kann es besonders vorteilhaft und platzsparend sein, wenn das Mittelteil im Wesentlichen die Höhe und Länge der Aufnahmemulden aufweist und eine Breite besitzt, welche der doppelten Höhe der Aufnahmemulden entspricht. In dem Mittelteil können zudem weitere elektronische Komponenten verbaut sein, wie zum Beispiel ein Kabelbaum. Zusätzlich kann an dem Mittelteil ein Frontteil angebracht sein, welches weitere Komponenten, wie zum Beispiel einen Not-Aus-Knopf oder eine Signallampe, umfasst.

In einer bevorzugten Variante sind der erste Flügel und der zweite Flügel um eine erste Schwenkachse schwenkbar gelagert. Somit können die Flügel aufeinander geschwenkt bzw. geklappt werden, um den Fernbedienungshalter in den geschlossenen Zustand zu bringen sowie mit der entgegengesetzten Bewegung den Fernbedienungshalter zu öffnen. Durch eine Anordnung, bei der beide Flügel um die selbe Schwenkachse drehbar sind, kann der Fernbedienungshalter besonders platzsparend realisiert werden.

Vorzugsweise ist der erste Flügel um eine erste Schwenkachse und der zweite Flügel um eine zweite Schwenkachse schwenkbar gelagert und die Schwenkachsen sind parallel zueinander orientiert. So können die Flügel bzw. die Schwenkachsen symmetrisch im Gesamtaufbau angeordnet werden, so dass der geschlossene Zustand des Fernbedienungshalters einer im Wesentlichen mittigen Position der beiden Flügel entspricht. Zudem können so die beiden Flügel exakt spiegelsymmetrisch konstruiert sein. Im aneinander geschwenkten, geschlossenen Zustand liegen die Flügel somit plan aneinander an und die Konstruktion der Teile ist besonders einfach.

Erfindungsgemäß ist der Fernbedienungshalter mit einem Verbindungsmechanismus an dem Straßenfertiger lösbar montiert. Dabei kann der Fernbedienungshalter mit einer Vielzahl von Verbindungsmechanismen, wie zum Beispiel einer Schraub- oder Steckverbindung, an dem Straßenfertiger bzw. der Einbaubohle montiert sein und zum Lösen der Verbindung wird idealerweise kein Werkzeug benötigt. So kann der Fernbedienungshalter nach Betriebsende abgenommen werden, um ihn andernorts sicher und vor Umwelteinflüssen geschützt zu verwahren. Außerdem wird so eine unerlaubte Inbetriebnahme des Straßenfertigers verhindert. Dabei ist es möglich, den Fernbedienungshalter sowohl im geöffneten, als auch im geschlossenen Zustand vom Straßenfertiger abzunehmen. Alternativ kann der Fernbedienungshalter jedoch auch an der Maschine verbleiben, insbesondere so befestigt, dass er nur mit Werkzeug zu lösen ist. Denkbar ist besonders, dass der Fernbedienungshalter nur mit Spezialwerkzeug zu lösen und damit besonders diebstahlsicher ist. So können nach Betriebsende die Flügel hochgeklappt werden, und der Fernbedienungshalter, wie unten beschrieben, verriegelt werden, was den Schutz der Fernbedienungen vor Umwelteinflüssen und vor Entnahme bietet.

Idealerweise sind die Fernbedienungen lösbar in dem Fernbedienungshalter anbringbar. So können die Fernbedienungen auch einzeln zum Verwahren, zur Reparatur oder zum Austausch entnommen werden. Außerdem kann unter Beibehaltung einer Datenverbindung eine Fernbedienung entnommen werden, um so auch von einer anderen Position die Funktion der Einbaubohle zu überwachen und diese zu steuern.

Bevorzugt weist der Fernbedienungshalter eine Schwingungsentkopplung auf, um die Fernbedienungen von Schwingungen des Straßenfertigers abzuschirmen. So werden Vibrationen des Motors, des Fahrwerks und der Einbaubohle des Straßenfertigers ausreichend gedämpft, um Beschädigungen der Fernbedienungen, insbesondere der elektronischen Bauteile, wie beispielsweise das Brechen von Lötverbindungen, zu verhindern.

In einer gängigen Variante weist der Fernbedienungshalter Ösen auf, um im geschlossenen Zustand verriegelbar zu sein. Zweckmäßig ist dabei jeweils eine Öse an dem ersten und zweiten Flügel ausgebildet, so dass diese beispielsweise mit einer Klammer verbunden werden können, um ein selbstständiges Öffnen des Fernbedienungshalters zu verhindern. Ebenfalls möglich ist es eine Klammer oder einen Haken bereits an einem der Flügel anzubringen und im geschlossenen Zustand des Fernbedienungshalters lediglich in eine Öse des anderen Flügels einzuhängen. Außerdem können die Ösen mit einem Vorhängeschloss verbunden werden, so dass ein unerlaubtes Öffnen des Fernbedienungshalters verhindert wird.

In einer weiteren vorteilhaften Variante umfasst der Fernbedienungshalter ein Schloss, um im geschlossenen Zustand abschließbar zu sein. Das Schloss, welches, im Gegensatz zu einem losen Vorhänge- oder Bügelschloss, in den Fernbedienungshalter integriert ist, wird mit einem Schlüssel betätigt und damit lediglich befugten Personen der Zugriff auf die Fernbedienungen gestattet.

Idealerweise weist jeder Flügel eine Aussparung auf, um ein Schwenken der Flügel in den geöffneten Zustand des Fernbedienungshalters zu erleichtern. Wie weiter unten anhand der Zeichnungen näher erläutert, können so die Flügel besser gegriffen werden um sie auseinander zu schwenken. Zusätzlich kann die Aussparung das Entnehmen der Fernbedienung erleichtern.

In einer weiteren Variante weisen die Flügel Steckverbindungen auf, an welche die Fernbedienungen angesteckt werden können. Dadurch wird die elektronische Verbindung von den Fernbedienungen zu dem Steuerungssystem des Straßenfertigers hergestellt. Hierbei kann beispielsweise ein CAN-Bus-System zum Einsatz kommen. Ist ein Stecker an dem jeweiligen Flügel ortsfest montiert, so kann dadurch auch die jeweilige Fernbedienung fixiert werden. Möglich ist hierbei auch, den Stecker ortsfest jedoch schwenkbar vorzusehen, so dass das An- und Abstecken in einer nach vorne geklappten Position des Steckers möglich ist und der Stecker ansonsten parallel zum Boden der Aufnahmemulde des Flügels orientiert ist, wenn die Fernbedienung vollständig in die Aufnahmemulde eingelegt ist.

Zweckmäßig umfassen die Flügel jeweils einen Magneten, um die Fernbedienungen zu fixieren. So können die Fernbedienungen, welche dafür ebenfalls einen Magneten oder ferromagnetische Bestandteile umfassen, besonders einfach in die Aufnahmemulden eingelegt und wieder entnommen werden und sind gleichzeitig, zumindest innerhalb eines gewissen Kraftbereichs, ortsfest in den Aufnahmemulden fixiert.

In einer zweckdienlichen Variante ist jeder der Flügel jeweils in der ersten Position, in welcher die Flügel im Wesentlichen eben nebeneinander angeordnet sind, und/oder in der zweiten Position, in welcher die Flügel im Wesentlichen aneinander geschwenkt sind, arretierbar. Dies kann, wie unten gezeigt, beispielsweise durch Zapfen oder Noppen erfolgen, welche mit entsprechenden Nuten in Eingriff kommen. Die Zapfen oder Noppen können beispielsweise federnd gelagert sein und aufgrund des gewählten Federdrucks ab einer gewissen Kraft zurückweichen und das Schwenken der Flügel zulassen. Somit bleiben die Flügel in der jeweils gewünschten Position, insbesondere auch beim Auftreten von Erschütterungen oder Vibrationen.

In einer weiteren bevorzugten Variante wird ein Verbindungskabel durch ein Verbindungsteil, welches zum Befestigen des Fernbedienungshalters an der Einbaubohle dient, geführt. Das Verbindungskabel kann mehrere Leitungsadern aufweisen und den Fernbedienungshalter, bzw. die beiden darin angeordneten Fernbedienungen beispielsweise mit Strom versorgen und eine Datenverbindung mit der elektronischen Steuerungsvorrichtung des Straßenfertigers herstellen. Das Verbindungsteil kann beispielsweise eine Buchse aufweisen und auf ein passendes Gegenstück, wie z.B. einen Zapfen, an der Einbaubohle aufgesteckt werden. Das Verbindungskabel kann durch das Verbindungsteil und den Zapfen, welcher hierzu zweckmäßig hohl ist, geführt werden. Somit ist das Verbindungskabel besonders platzsparend verlegt und vor Umwelteinflüssen oder Beschädigungen geschützt.

In einer besonders zweckmäßigen Variante beherbergt einer oder beide der Flügel eine Kabellagerung mit einem ausziehbaren Kabel zum Verbinden mit einer Fernbedienung und die Kabellagerung weist einen Rückzugmechanismus auf, um das ausziehbare Kabel in die Kabellagerung zurückzuziehen. Somit sind die Fernbedienungen auch verwendbar, wenn sie aus dem Fernbedienungshalter entnommenen sind. So können die Einstellungen der Einbaubohle überwacht und geregelt werden, auch wenn es dazu nötig ist, den Einbauprozess von einer anderen Position als derjenigen, an welcher der Fernbedienungshalter angebracht ist, zu überwachen. Dabei kann das Kabel fest mit der Fernbedienung verbunden sein, oder wie zuvor beschrieben über eine Steckverbindung lösbar sein. Durch den Rückzugmechanismus wird beim Zurücklegen der Fernbedienung in die Aufnahmemulde das Kabel in die Kabellagerung aufgerollt und verbleibt nicht in der Aufnahmemulde oder an einer anderen Stelle des Fernbedienungshalters, wo das Einlegen in die Aufnahmemulde gestört wird oder ein Arbeiter an dem herunterhängenden Kabel hängen bleiben könnte.

Im Folgenden werden Ausführungsbeispiele der Erfindung anhand der Figuren näher beschrieben. Dabei zeigen
- Figur 1:: eine perspektivische Ansicht eines Fernbedienungshalters mit zwei Fernbedienungen,
- Figur 2:: eine perspektivische Ansicht eines Fernbedienungshalters mit freien Aufnahmemulden,
- Figur 3:: eine perspektivische Rückansicht eines Fernbedienungshalters,
- Figur 4:: eine perspektivische Rückansicht eines Fernbedienungshalters mit geöffneter Abdeckung eines Mittelteils,
- Figur 5:: eine perspektivische Ansicht eines Fernbedienungshalters mit Flügeln in einer mittleren Schwenkposition,
- Figur 6:: eine perspektivische Ansicht eines Fernbedienungshalters mit Flügeln in einer aneinander geschwenkten Position,
- Figur 7:: eine schematische Seitenansicht eines Straßenfertigers mit Einbaubohle und Fernbedienungshalter.

Einander entsprechende Komponenten sind in den Figuren jeweils mit gleichen Bezugszeichen versehen.

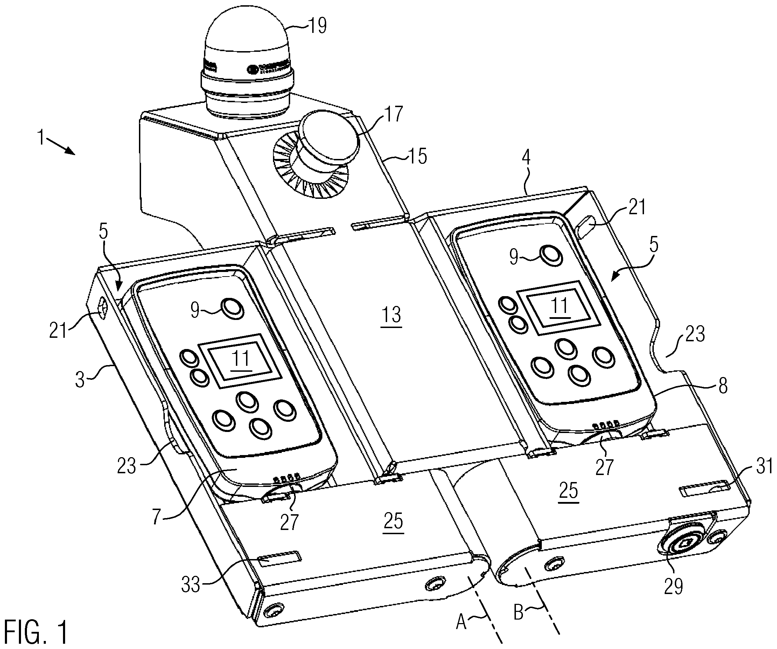

Figur 1 zeigt einen Fernbedienungshalter 1 mit zwei schwenkbaren Flügeln 3, 4, welche jeweils eine Aufnahmemulde 5 umfassen, in denen je eine Fernbedienung 7, 8 eingelegt ist. Die Fernbedienungen 7, 8 weisen Bedienelemente 9 und Anzeigeelemente 11 zum Steuern der Funktionen eines Straßenfertigers bzw. einer Einbaubohle auf. Der erste Flügel 3 ist an einem Mittelteil 13 um eine Achse A und der zweite Flügel 4 ist an dem Mittelteil 13 um eine Achse B schwenkbar gelagert, wobei die beiden Achsen A, B parallel zueinander sind. An dem Mittelteil 13 anschließend ist ein Frontteil 15 ausgebildet, an welchem zusätzliche Komponenten wie einen Not-Aus-Knopf 17 und eine Signallampe 19 verbaut sind. Seitlich an den Flügeln 3, 4 ist jeweils eine Öse 21 ausgebildet, durch welche im aneinander geklappten Zustand ein Schloss, beispielsweise ein Bügelschloss, geführt werden kann, um den Fernbedienungshalter 1 zu verriegeln. Auch kann ein hakenartiges Element ohne Schlossfunktion in die Ösen 21 eingehängt werden, um den Fernbedienungshalter 1 im geschlossenen Zustand zu halten. Zudem ist jeweils eine Aussparung 23 vorhanden, die das Herausnehmen der Fernbedienungen 7, 8 sowie das Aufschwenken der Flügel 3, 4 aus dem geschlossenen Zustand erleichtert. Im unteren Teil der Flügel 3, 4 sind Gehäuse 25 ausgebildet, welche elektronische Komponenten sowie Verbindungselemente wie Kabel und Steckverbindungen beherbergen können. Eine Steckverbindung 27, welche beispielsweise zur Strom- und Spannungsversorgung sowie zum Anschluss an einen CAN-Bus dienen kann, ist jeweils zwischen der Fernbedienung 7, 8 und dem Gehäuse 25 zu erkennen. Desweiteren ist in dem zweiten Flügel 4 ein Schloss 29 angeordnet, welches in einem aneinander geschwenkten, geschlossenen Zustand einen Haken 31 mit einer Öse 33 des ersten Flügels 3 in Eingriff bringt und so den Fernbedienungshalter 1 verschließt.

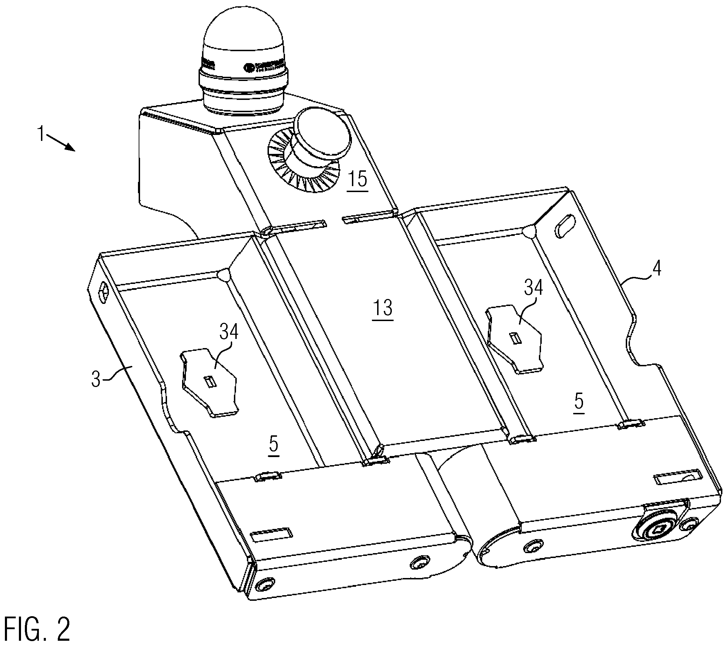

Figur 2 zeigt den Fernbedienungshalter 1 mit freien Aufnahmemulden 5, in denen Magnete 34 angebracht sind, um die Fernbedienungen 7, 8 zu fixieren. Die Rückseiten der Fernbedienungen 7, 8 können dabei zusätzlich so gestaltet sein, dass sie zu den Magneten 34 komplementäre Formen aufweisen, um sich auch mechanisch mit den Magneten 34 zu verschränken.

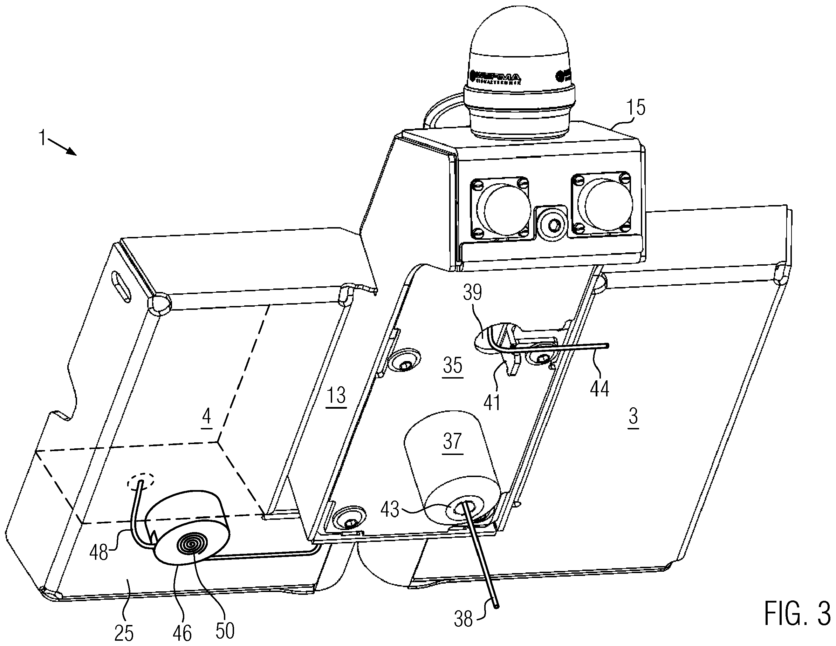

Figur 3 zeigt eine perspektivische Rückansicht des Fernbedienungshalters 1. Das Mittelteil 13 ist mit einer abnehmbaren Abdeckung 35 verschlossen, an welcher ein Verbindungsteil 37, in dieser Form zum Aufstecken auf eine Halterung an der Einbaubohle, angebracht ist. Das Verbindungsteil 37 weist eine Schwingungsentkopplung 43 auf, welche zum Beispiel als eine mittels Feder und Dämpfer gelagerte Buchse ausgeführt ist. In die Schwingungsentkopplung 43 kann ein entsprechendes Gegenstück an der Einbaubohle, beispielsweise in Form eines Zapfens, einrasten, wenn der Fernbedienungshalter 1 bzw. das Verbindungsteil 37 auf dieses aufgesteckt wird. Durch das Verbindungsteil 37 kann ein Verbindungskabel 38 geführt werden, welches die Fernbedienungen 7, 8 mit einem elektronischen Steuerungssystem des Straßenfertigers verbindet und die Fernbedienungen 7, 8 mit Strom versorgt. Zweckmäßig ist dazu das Gegenstück, z.B. der Zapfen, an der Einbaubohle hohl, um das Verbindungskabel 38 auch darin zu führen. Alternativ oder zusätzlich können ein oder mehrere Verbindungskabel 44 über eine separate Öffnung 39 sowie eine erste Kabelführung 41 von dem elektronischen Steuerungssystem des Straßenfertigers zu den Fernbedienungen 7, 8 geführt werden.

Für den zweiten Flügel 4 ist, beispielhaft als Durchsicht, innerhalb des Gehäuses 25 eine Kabellagerung 46 gezeigt, welche ein ausziehbares Kabel 48 beherbergt. Das ausziehbare Kabel 48 kann an die Fernbedienung 8 angeschlossen, z.B. angesteckt, werden. Wird die Fernbedienung 8 aus dem Fernbedienungshalter 1 entnommen, so wird das Kabel 48 aus der Kabellagerung 46 herausgezogen. Die Kabellagerung 46 weist in dieser Ausführungsform zudem einen Rückzugmechanismus 50 auf, beispielsweise in Form einer vorgespannten spiralförmigen Triebfeder, welche das Kabel 48 beim Herausziehen mit einer gewissen Rückzugskraft spannt und beim Zurücklegen der Fernbedienung 8 das Kabel 48 wieder in die Kabellagerung 46 zurückzieht und darin aufwickelt. Selbige Vorrichtung kann auch für den ersten Flügel 3 vorhanden sein.

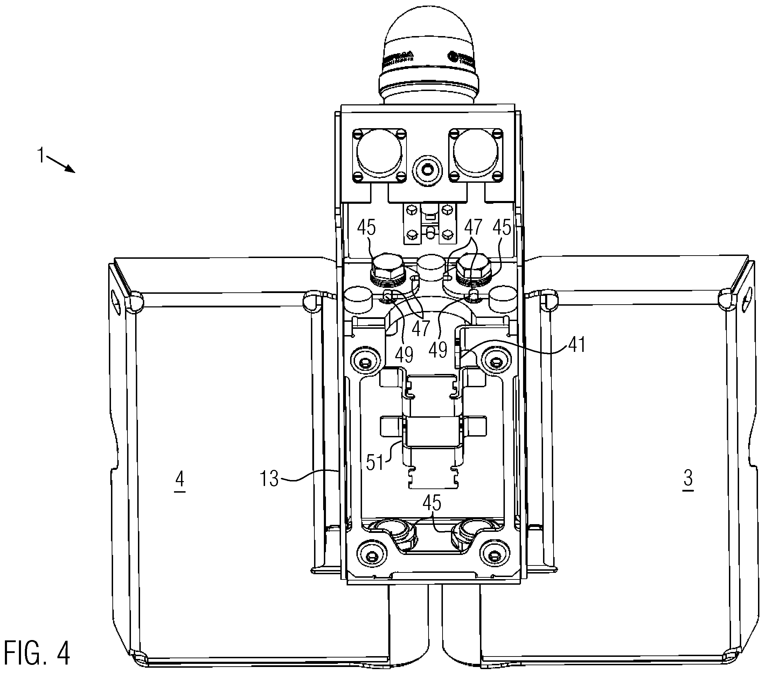

Figur 4 zeigt eine perspektivische Rückansicht des Fernbedienungshalters 1 mit entfernter Abdeckung 35 des Mittelteils 13. Zu erkennen sind Scharniere 45, um welche die Flügel 3, 4 drehbar gelagert sind. Die Scharniere 45 können Nute 47 aufweisen, welche mit federnd gelagerten Noppen 49 in Eingriff kommen, um die Flügel 3, 4 in der geöffneten Position sowie der aneinander geschwenkten, geschlossenen Position zu arretieren. Zusätzlich zu der ersten Kabelführung 41 ist eine zweite Kabelführung 51 angeordnet, um die Verbindungskabel von einem Straßenfertiger zu den Fernbedienungen 7, 8 zu führen und durch entsprechende Klemmung eine Zugentlastung und eine zusätzliche Entkopplung von Vibrationen zu gewährleisten.

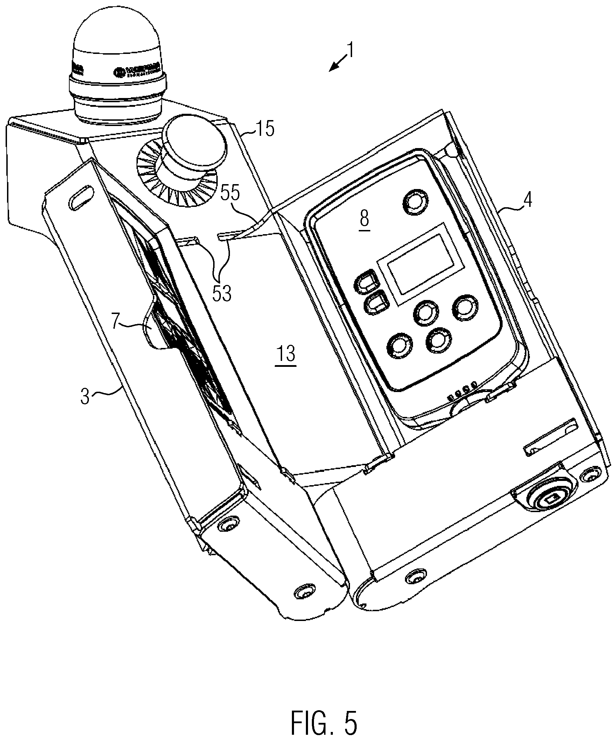

Figur 5 zeigt den Fernbedienungshalter 1 bei welchem die Flügel 3, 4 in eine mittlere Zwischenposition geschwenkt sind. An dem Übergang zwischen Mittelteil 13 und Frontteil 15 sind Schlitze 53 ausgebildet, so dass Verbindungsabschnitte 55 der Flügel 3, 4 mit den Scharnieren 45 durch die Schlitze 53 hindurch geschwenkt werden können, um die Flügel 3, 4 über dem Mittelteil 13 aneinander zusammengeklappt zu positionieren.

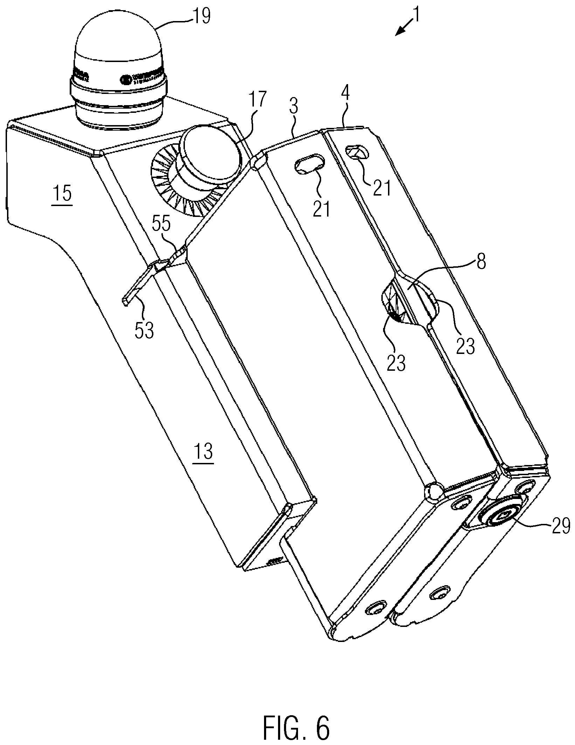

Figur 6 zeigt eine perspektivische Ansicht des Fernbedienungshalters 1, bei welchem die Flügel 3, 4 in einer aneinander geschwenkten, geschlossenen Position sind. In dieser Position ist ein Zugriff auf die Fernbedienungen 7, 8 verhindert und sie sind zudem vor äußeren Umwelteinflüssen, wie zum Beispiel UV-Strahlung und Witterung, geschützt. Die gezeigte Anordnung ist platzsparend und somit insbesondere auch geeignet, um den Fernbedienungshalter 1 von der Einbaubohle abzunehmen und andernorts zu verstauen. Ein Öffnen des Fernbedienungshalters 1 kann insbesondere durch verbinden der Ösen 21 mit einem Haken sowie durch das Verschließen des Schlosses 29 verhindert werden. Beim Aufschwenken der Flügel 3, 4 können die Aussparungen 23 als Eingriff dienen.

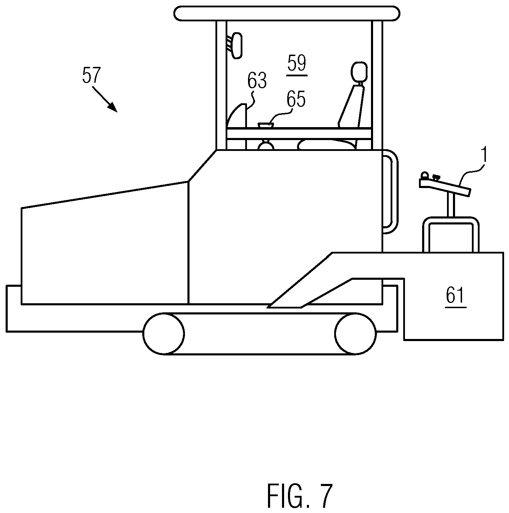

Figur 7 zeigt eine schematische Seitenansicht eines Straßenfertigers 57 mit einem Hauptbedienstand 59 und einer Einbaubohle 61. Auf dem Hauptbedienstand 59 ist ein Bedienpanel 63 sowie weitere Bedienvorrichtungen 65 vorhanden, so dass ein Fahrer alle Funktionen des Straßenfertigers 57 steuern kann. An der Einbaubohle 61 ist der Fernbedienungshalter 1 angebracht, so dass ein weiterer Arbeiter mittels der im Fernbedienungshalter 1 angeordneten Fernbedienungen 7, 8 Funktionen des Straßenfertigers 57, insbesondere die Einstelllungen der Einbaubohle 61, direkt an dieser und damit in unmittelbarer Nähe zum Einbauvorgang steuern kann. Zweckmäßig ist der Fernbedienungshalter 1 an einem seitlichen Ende der Einbaubohle 61 angeordnet, wobei zumeist an beiden seitlichen Enden je ein Fernbedienungshalter 1 angebracht ist, da es im Fertigungsbetrieb besonders von Bedeutung ist, die seitlichen Ränder des neu gefertigten Straßenbelags zu überwachen.

Ausgehend von den oben dargestellten Ausführungsformen eines Fernbedienungshalters 1 sind vielerlei Variationen desselben möglich. So kann beispielsweise ein Federmechanismus in dem Mittelteil 13 vorhanden sein, welcher das Schwenken der Flügel 3, 4 in eine Richtung, z.B. in die geschlossene Position fördert. Die Fernbedienungen 7, 8 können Batterien oder Akkumulatoren umfassen und in einem alternativen Betriebsmodus anstatt mit Kabeln 38, 44, 48 drahtlos mit dem Steuerungssystem des Straßenfertigers 57 verbunden sein.

## Patentansprüche

1. Fernbedienungshalter (1) mit einem Verbindungsmechanismus zum lösbaren Montieren an einem Straßenfertiger (57), insbesondere an einer Einbaubohle (61) des Straßenfertigers (57), wobei der Fernbedienungshalter (1) dazu konfiguriert ist, eine erste und eine zweite Fernbedienung (7, 8) zu halten, wobei die Fernbedienungen (7, 8) Bedienelemente (9) zum Steuern von Funktionen des Straßenfertigers (57) aufweisen, **dadurch gekennzeichnet, dass** der Fernbedienungshalter (1) zwei Flügel (3, 4) mit jeweils einer Aufnahmemulde (5) umfasst, und jeder Flügel (3, 4) dazu vorgesehen ist jeweils eine Fernbedienung (7, 8) in der Aufnahmemulde (5) aufzunehmen, und die Flügel (3, 4) zwischen einer ersten Position, in welcher die Flügel (3, 4) im Wesentlichen eben nebeneinander angeordnet sind und der Fernbedienungshalter (1) geöffnet ist, und einer zweiten Position, in welcher die Flügel (3, 4) im Wesentlichen aneinander geschwenkt sind und der Fernbedienungshalter (1) geschlossen ist, schwenkbar sind.

2. Fernbedienungshalter nach Anspruch 1, **dadurch gekennzeichnet,** ein Mittelteil (13) aufzuweisen, an welchem der erste und zweite Flügel (3, 4) schwenkbar gelagert sind.

3. Fernbedienungshalter nach einem der vorangegangenen Ansprüche, **dadurch gekennzeichnet, dass** der erste Flügel (3) und der zweite Flügel (4) um eine erste Schwenkachse (A) schwenkbar gelagert sind.

4. Fernbedienungshalter nach einem der Ansprüche 1 oder 2, **dadurch gekennzeichnet, dass** der erste Flügel (3) um die erste Schwenkachse (A) und der zweite Flügel (4) um eine zweite Schwenkachse (B) schwenkbar gelagert ist und die Schwenkachsen (A, B) parallel zueinander orientiert sind.

5. Fernbedienungshalter nach einem der vorangegangenen Ansprüche, **dadurch gekennzeichnet, dass** die Fernbedienungen (7, 8) lösbar in dem Fernbedienungshalter (1) anbringbar sind.

6. Fernbedienungshalter nach einem der vorangegangenen Ansprüche, **dadurch gekennzeichnet,** eine Schwingungsentkopplung (43) aufzuweisen, um die Fernbedienungen (7, 8) von Schwingungen des Straßenfertigers (57) abzuschirmen.

7. Fernbedienungshalter nach einem der vorangegangenen Ansprüche, **dadurch gekennzeichnet,** Ösen (21) aufzuweisen, um im geschlossenen Zustand verriegelbar zu sein.

8. Fernbedienungshalter nach einem der vorangegangenen Ansprüche, **dadurch gekennzeichnet,** ein Schloss (29) zu umfassen, um im geschlossenen Zustand abschließbar zu sein.

9. Fernbedienungshalter nach einem der vorangegangenen Ansprüche, **dadurch gekennzeichnet, dass** jeder Flügel (3, 4) eine Aussparung (23) aufweist, um ein Schwenken der Flügel (3, 4) in den geöffneten Zustand des Fernbedienungshalters (1) zu erleichtern.

10. Fernbedienungshalter nach einem der vorangegangenen Ansprüche, **dadurch gekennzeichnet, dass** die Flügel (3, 4) Steckverbindungen (27) aufweisen, an welche die Fernbedienungen (7, 8) angesteckt werden können.

11. Fernbedienungshalter nach einem der vorangegangenen Ansprüche, **dadurch gekennzeichnet, dass** die Flügel (3, 4) jeweils einen Magneten (34) umfassen, um die Fernbedienungen (7, 8) zu fixieren.

12. Fernbedienungshalter nach einem der vorangegangenen Ansprüche, **dadurch gekennzeichnet, dass** jeder der Flügel (3, 4) jeweils in der ersten Position, in welcher die Flügel (3, 4) im Wesentlichen eben nebeneinander angeordnet sind, und/oder in der zweiten Position, in welcher die Flügel (3, 4) im Wesentlichen aneinander geschwenkt sind, arretierbar ist.

13. Fernbedienungshalter nach einem der vorangegangenen Ansprüche, **dadurch gekennzeichnet, dass** ein Verbindungskabel (38) durch ein Verbindungsteil (37), welches zum Befestigen des Fernbedienungshalters (1) an der Einbaubohle (61) dient, geführt wird.

14. Fernbedienungshalter nach einem der vorangegangenen Ansprüche, **dadurch gekennzeichnet, dass** einer oder beide der Flügel (3, 4) eine Kabellagerung (46) mit einem ausziehbaren Kabel (48) zum Verbinden mit einer Fernbedienung (7, 8) beherbergt und die Kabellagerung (46) einen Rückzugmechanismus (50) aufweist, um das ausziehbare Kabel (48) in die Kabellagerung (46) zurückzuziehen.

## Claims

1. Remote control holder (1) with a connection mechanism for detachably mounting on a road finisher (57), in particular on a paving screed (61) of the road finisher (57), the remote control holder (1) being configured to hold a first and a second remote control (7, 8), the remote controls (7, 8) comprising control elements (9) for controlling functions of the road finisher (57), **characterized in that** the remote control holder (1) comprises two wings (3, 4) each having a receiving tray (5), and each wing (3, 4) is intended to receive a remote control (7, 8) in the receiving tray (5), and the wings (3, 4) are pivotable between a first position, in which the wings (3, 4) are arranged substantially flat next to each other and the remote control holder (1) is open, and a second position, in which the wings (3, 4) are substantially pivoted to each other and the remote control holder (1) is closed.

2. Remote control holder according to claim 1, **characterized in that** it comprises a middle part (13) on which the first and second wings (3, 4) are pivotably supported.

3. Remote control holder according to one of the preceding claims, **characterized in that** the first wing (3) and the second wing (4) are pivotably supported about a first pivot axis (A).

4. Remote control holder according to one of claims 1 or 2, **characterized in that** the first wing (3) is pivotably supported about the first pivot axis (A) and the second wing (4) is pivotably supported about a second pivot axis (B) and the pivot axes (A, B) are oriented parallel to each other.

5. Remote control holder according to one of the preceding claims, **characterized in that** the remote controls (7, 8) can be detachably mounted in the remote control holder (1).

6. Remote control holder according to one of the preceding claims, **characterized in that** it comprises a vibration decoupler (43) for shielding the remote controls (7, 8) from vibrations of the road finisher (57).

7. Remote control holder according to one of the preceding claims, **characterized in that** it comprises eyelets (21) in order to be lockable in the closed state.

8. Remote control holder according to one of the preceding claims, **characterized in that** it comprises a lock (29) to be lockable in the closed state.

9. Remote control holder according to one of the preceding claims, **characterized in that** each wing (3, 4) comprises a recess (23) to facilitate pivoting of the wings (3, 4) into the open state of the remote control holder (1).

10. Remote control holder according to one of the preceding claims, **characterized in that** the wings (3, 4) have plug connections (27) to which the remote controls (7, 8) can be plugged.

11. Remote control holder according to one of the preceding claims, **characterized in that** the wings (3, 4) each comprise a magnet (34) for fixing the remote controls (7, 8).

12. Remote control holder according to one of the preceding claims, **characterized in that** each of the wings (3, 4) is lockable in the first position, in which the wings (3, 4) are arranged substantially flat next to each other, and/or in the second position, in which the wings (3, 4) are substantially pivoted to each other.

13. Remote control holder according to one of the preceding claims, **characterized in that** a connecting cable (38) is guided through a connecting part (37) which serves to fasten the remote control holder (1) to the paving screed (61).

14. Remote control holder according to one of the preceding claims, **characterized in that** one or both of the wings (3, 4) houses a cable support (46) with a pull-out cable (48) for connection to a remote control (7, 8) and the cable support (46) comprises a retraction mechanism (50) for retracting the pull-out cable (48) into the cable support (46).

## Revendications

1. Support à télécommande (1) avec un mécanisme de liaison pour le montage amovible sur une finisseuse de route (57), en particulier sur une table de pose (61) du finisseur de route (57), le support à télécommande (1) étant configuré pour recevoir une première et une seconde télécommandes (7, 8), les télécommandes (7, 8) comprenant des éléments de commande (9) pour la commande de fonctions du finisseur de route (57), **caractérisé en ce que** le support à télécommande (1) présente deux ailes (3, 4) présentant chacun un évidement de réception (5), et chaque aile (3, 4) est destinée à recevoir une télécommande (7, 8) dans l'évidement de réception (5), et les ailes (3, 4) peuvent pivoter entre une première position dans laquelle les ailes (3, 4) sont disposées sensiblement à plat l'une à côté de l'autre et le support à télécommande (1) est ouvert, et une seconde position dans laquelle les ailes (3, 4) sont pivotées sensiblement l'une contre l'autre et le support à télécommande (1) est fermé.

2. Support à télécommande selon la revendication 1, **caractérisé en ce qu'**il comprend une partie centrale (13) sur laquelle les première et seconde ailes (3, 4) sont montées de manière pivotante.

3. Support à télécommande selon l'une des revendications précédentes, **caractérisé en ce que** la première aile (3) et la seconde aile (4) sont montées de manière pivotante autour d'un premier axe de pivotement (A).

4. Support à télécommande selon l'une des revendications 1 ou 2, **caractérisé en ce que** la première aile (3) est montée de manière à pouvoir pivoter autour du premier axe de pivotement (A) et la seconde aile (4) est montée de manière à pouvoir pivoter autour d'un seconde axe de pivotement (B) et les axes de pivotement (A, B) sont orientés parallèlement l'un à l'autre.

5. Support à télécommande selon l'une des revendications précédentes, **caractérisé en ce que** les télécommandes (7, 8) peuvent être montées de manière amovible dans le support à télécommande (1).

6. Support à télécommande selon l'une des revendications précédentes, **caractérisé en ce qu'**il comporte un dispositif de découplage des vibrations (43) afin de protéger les télécommandes (7, 8) des vibrations du finisseur de route (57).

7. Support à télécommande selon l'une des revendications précédentes, **caractérisé en ce qu'**il comporte des oeillets (21) pour pouvoir être verrouillé à l'état fermé.

8. Support à télécommande selon l'une des revendications précédentes, **caractérisé en ce qu'**il comprend une serrure (29) pouvant être verrouillée à l'état fermé.

9. Support à télécommande selon l'une des revendications précédentes, **caractérisé en ce que** chaque aile (3, 4) présente un évidement (23) pour faciliter le pivotement des ailes (3, 4) dans l'état ouvert du support à télécommande (1).

10. Support à télécommande selon l'une des revendications précédentes, **caractérisé en ce que** les ailes (3, 4) ont des connexions à fiches (27) auxquelles les télécommandes (7, 8) peuvent être branchées.

11. Support à télécommande selon l'une des revendications précédentes, **caractérisé en ce que** les ailes (3, 4) comportent chacune un aimant (34) pour la fixation des télécommandes (7, 8).

12. Support à télécommande selon l'une des revendications précédentes, **caractérisé en ce que** chacune des ailes (3, 4) peut être verrouillée dans la première position, dans laquelle les ailes (3, 4) sont disposées sensiblement à plat l'une à côté de l'autre, et/ou dans la seconde position, dans laquelle les ailes (3, 4) sont sensiblement pivotées l'une par rapport à l'autre.

13. Support à télécommande selon l'une des revendications précédentes, **caractérisé en ce qu'**un câble de raccordement (38) est passé à travers une pièce de raccordement (37) qui sert à fixer le support à télécommande (1) à la table de pose (61).

14. Support à télécommande selon l'une des revendications précédentes, **caractérisé en ce qu'**une ou les deux ailes (3, 4) reçoivent un support de câble (46) ayant un câble extensible (48) pour la connexion à une télécommande (7, 8) et le support de câble (46) a un mécanisme de rétraction (50) pour rétracter le câble extensible (48) dans le support de câble (46).
